(19) Europäisches Patentamt
European Patent Office
Office européen des brevets

(11) EP 3 037 453 A1

(12) DEMANDE DE BREVET EUROPEEN

(43) Date de publication:
**29.06.2016 Bulletin 2016/26**

(51) Int Cl.:
***C08G 63/183*** *(2006.01)*

(21) Numéro de dépôt: **14307138.9**

(22) Date de dépôt: **22.12.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Rhodia Operations**
**75009 Paris (FR)**

(72) Inventeur: **JEOL, Stéphane**
**GA-30041 Cumming (US)**

(74) Mandataire: **Vande Gucht, Anne et al**
**Solvay S.A.**
**Intellectual Assets Management**
**Rue de Ransbeek, 310**
**1120 Bruxelles (BE)**

(54) **Polyesters issus de diacide carboxylique aromatique et du 2,5-bis(hydroxymethyl)tetrahydrofurane**

(57) La présente invention concerne un polyester comprenant au moins 60% en moles d'un ou plusieurs motif(s) répétitif(s) (a) de formule générale (I) :

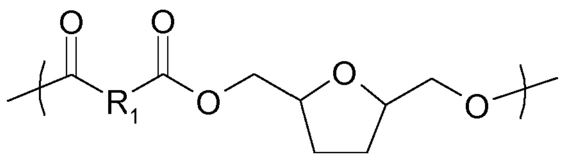

(I)

dans laquelle $R_1$ représente un groupement aromatique divalent en $C_6$-$C_{24}$ comprenant au moins un noyau benzénique, ladite quantité molaire étant calculée par rapport à la quantité totale en moles de motifs dudit polyester.

EP 3 037 453 A1

## Description

La présente invention concerne des polyesters, comprenant au moins 60% en moles de motifs répétitifs formés par la réaction de polycondensation du 2,5-bis(hydroxyméthyl)tétrahydrofurane et d'au moins un composé choisi parmi les diacides carboxyliques aromatiques, leurs diesters ou leurs chlorures d'acide.

L'invention porte également sur un procédé de préparation desdits polyesters.

Les polyesters sont connus pour être utilisés dans de nombreux domaines de la vie courante, notamment dans la fabrication de matières plastiques, de fibres textiles et des emballages. De tels polyesters peuvent être généralement préparés à partir de la condensation de composés monomères de diacides carboxyliques avec des composés monomères de diol.

Un polyester bien connu sur le marché des plastiques est par exemple le poly(téréphtalate d'éthylène) (PET) obtenu le plus souvent par polycondensation de l'acide téréphtalique avec l'éthylène glycol.

Il existe plusieurs versions du PET, adaptées aux besoins du marché. On trouve par exemple du PET semi-cristallin utilisé principalement pour le marché des fibres textiles, des bouteilles ou encore des films, et des copolyesters amorphes ayant une température de transition vitreuse (Tg) supérieure à 60°C à base de PET, tels que le PETG (obtenus par polycondensation de l'acide téréphtalique, éthylène glycol et le 1,4-cyclohexane diméthanol), que l'on retrouve dans des applications nécessitant d'avoir une parfaite transparence.

Les polyesters actuellement utilisés sont généralement des polymères obtenus à partir de ressources fossiles. Or, dans le contexte économique et écologique actuel, l'élaboration de polymères, notamment des polyesters, issus de ressources naturelles plutôt que fossiles, s'avère être une alternative intéressante et nécessaire.

Il apparaît donc important de pouvoir développer des polyesters bio-sourcés, c'est-à-dire issus partiellement ou totalement de ressources naturelles, ayant des propriétés, notamment thermiques et mécaniques, équivalentes ou supérieures aux polyesters synthétiques actuellement utilisés qui sont issus de ressources fossiles, comme par exemple le PET.

A cet effet, des travaux, développés par Thiem et Lüders dans « Synthesis of polyterephthalates derived from dianhydrohexitols », Polymer Bulletin, 365-369 (1984), ont visé à substituer l'éthylène glycol par le 1,4:3,6-dianhydrohexitol, aussi connu sous les noms isosorbide, isoidide ou isomannide (différents stéréoisomères), qui est un diol bio-sourcé très rigide. En effet, le 1,4:3,6-dianhydrohexitol peut être synthétisé à partir de l'amidon extrait par exemple des céréales. Ils ont constaté que le poly(téréphtalate d'isosorbide) issu de cette synthèse avait de bonnes propriétés thermiques.

Cependant, le polyester obtenu comporte une masse molaire faible car le monomère diol est très peu réactif.

Par ailleurs, les travaux décrits par Storbeck et al. dans « Synthesis and properties of polyesters based on 2,5-furandicarboxylic acid and 1,4:3,6-dianhydrohexitols », Polymer 34 (1993) 5003-5006, consistent à synthétiser un polyester à partir de l'acide 2,5-furanedicarboxylique (FDCA) que l'on peut facilement obtenir à partir du D-fructose, une molécule issue de la biomasse.

Cependant, le FDCA peut se dégrader thermiquement par décarboxylation, comme décrit dans « Über polyamide aus heterocyclischen dicarbonsäuren », Die Makromolekulare Chemie47 (1961) 93-113, pour les polyamides, et ainsi agir comme un limiteur de chaine freinant le développement des chaines (faibles masses molaires obtenues) ou éventuellement engendrer le départ de furane, un gaz toxique et cancérigène.

De manière alternative, il a été envisagé d'employer un autre diacide, à savoir l'acide 2,5-tétrahydrofurane dicarboxylique (THFDCA), et son dérivé diester pouvant être obtenu à partir du fructose ou du glucose que l'on trouve en abondance par exemple dans les fruits ou le miel, qui est un diacide bio-sourcé cyclo-aliphatique et qui ne pose pas les mêmes problèmes que le FDCA.

Toutefois, les polyesters obtenus avec le THFDCA et l'éthylène glycol ou le 2,5-bis(hydroxyméthyl)tétrahydrofurane, tels que décrits par exemple dans «Polyesters of 2,5-disubstituted furan and tetrahydrofuran », Polymer preprints vol.15, n°2, september 1974, 441-444, sont amorphes et présentent des températures de transition vitreuse (Tg) plus faibles (proches de 0°C) que celles de polyesters à base de FDCA, comme cela est détaillé dans « Synthesis and caracterization of poly(2,5-furan dicarboxylate)s based on a variety of diols », Journal of polymer science part A : Polymer chemistry, 49 (2011) 3759-3768.

D'autres travaux tels que décrits dans le document JP 39024730 font état de la synthèse d'une résine polyester à partir du 2,5-bis(hydroxyméthyl)tétrahydrofurane, de l'éthylène glycol et du téréphtalate de diméthyle dans des proportions molaires bien spécifiques. En effet, ce document décrit un procédé comprenant une première étape consistant à faire réagir 0,1 mol de 2,5-bis(hydroxyméthyl)tétrahydrofurane, 0,1 mol d'éthylène glycol et 0,15 mol de téréphtalate de diméthyle et une deuxième étape de chauffage à une température supérieure ou égale à 200°C.

Ce procédé présente l'inconvénient de conduire à une résine de polyester insoluble et infusible, c'est-à-dire à un polyester qui n'est plus transformable ce qui empêche son recyclage.

La présente invention a donc pour objet de proposer une solution permettant de résoudre l'ensemble des problèmes mentionnés ci-dessus en synthétisant un polyester partiellement bio-sourcé qui présente notamment des

propriétés mécaniques satisfaisantes et de bonnes propriétés thermiques, tout en utilisant un procédé de synthèse viable.

Le polyester selon l'invention comprend au moins 60% en moles d'un ou plusieurs motif(s) répétitif(s) (a) de formule générale (I) :

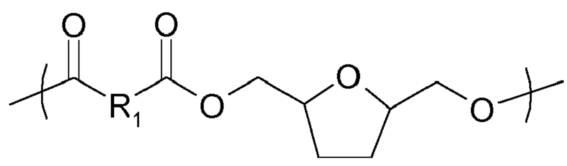

(I)

dans laquelle $R_1$ représente un groupement aromatique divalent en $C_6$-$C_{24}$ comprenant au moins un noyau benzénique, ladite quantité molaire étant calculée par rapport à la quantité totale en moles des motifs dudit polyester.

Le noyau benzénique peut être éventuellement substitué par :

- un ou plusieurs radicaux alkyles, linéaires ou ramifiés, en $C_1$-$C_4$ ;
- un ou plusieurs groupements sulfonates ;
- un cycle aromatique, notamment un noyau benzénique ;
- un ou plusieurs groupements hydroxyles.

Le ou les motif(s) répétitif(s) (a) sont généralement formés par la réaction de polycondensation du 2,5-bis(hydroxyméthyl)tétrahydrofurane et d'un ou plusieurs composés choisi(s) parmi les diacide(s) carboxylique(s) aromatique(s), leurs diesters, leurs chlorures d'acide.

De préférence, le ou les motif(s) répétitif(s) (a) sont formés par la réaction de polycondensation du 2,5-bis(hydroxyméthyl)tétrahydrofurane et d'un ou plusieurs composés choisis parmi les diacide(s) carboxylique(s) aromatique(s) et leurs diesters de formule générale (II) :

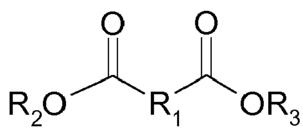

(II)

dans laquelle :

- $R_1$ présente la même signification que celle définie dans la formule (I),
- $R_2$ et $R_3$, identiques ou différents, représentent indépendamment l'un de l'autre, un atome d'hydrogène ou un groupement alkyle en $C_1$-$C_6$, notamment en $C_1$-$C_4$, en particulier $C_1$.

Plus préférentiellement, le ou les motif(s) répétitif(s) (a) sont susceptibles d'être formés par la réaction de polycondensation d'un ou plusieurs diacide(s) carboxylique(s) aromatique(s) et du 2,5-bis(hydroxyméthyl)tétrahydrofurane.

La présente invention porte également sur un procédé de synthèse du polyester, ainsi que sur ses utilisations.

Un autre objet de l'invention concerne une composition comprenant un tel polyester.

Le polyester conforme à l'invention présente l'avantage d'être potentiellement un polymère partiellement bio-sourcé.

Au sens de la présente invention, on entend par polyester bio-sourcé un polyester préparé à partir de monomères dérivant de ressources renouvelables.

On entend par ressource renouvelable une ressource naturelle, animale ou végétale, dont le stock peut se reconstituer sur une courte période à l'échelle humaine. Il faut que le stock puisse se renouveler au moins aussi vite qu'il est consommé.

En effet, comme indiqué ci-avant, le polyester comprend un ou plusieurs motif(s) répétitif(s) (a) obtenus à partir du 2,5-bis(hydroxyméthyl)tétrahydrofurane et d'un ou plusieurs composé(s) choisi(s) parmi les diacides carboxyliques aromatiques, leurs diesters, leurs chlorures d'acide.

Le 2,5-bis(hydroxyméthyl)tétrahydrofurane est un diol primaire avantageusement bio-sourcé présentant une

bonne stabilité thermique et qui peut être directement obtenu à partir d'hexoses, comme le glucose ou le fructose, conformément au schéma réactionnel ci-après :

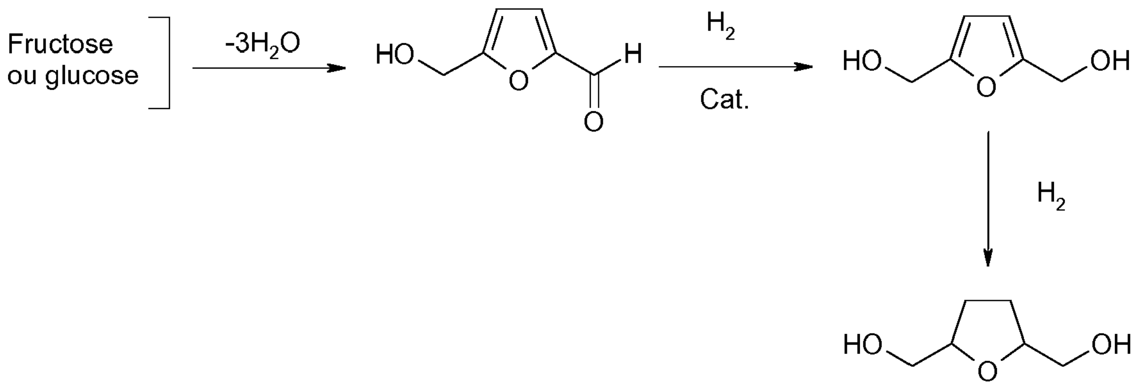


En fonction du procédé de synthèse et des différentes étapes de séparation, le 2,5-bis(hydroxyméthyl)tétrahydrofurane peut être constitué exclusivement du stéréoisomère cis, exclusivement du stéréoisomère trans ou bien d'un mélange (stéréoisomère cis : stéréoisomère trans) dans des proportions massiques allant de 0.1 : 99.9 à 99.9 : 0.1 % en poids.

Ainsi, le polyester selon l'invention est avantageusement obtenu à partir d'un ou plusieurs monomère(s) biosourcés.

Les polyesters selon l'invention sont amorphes ou semi-cristallins, préférentiellement amorphes, et présentent de bonnes propriétés thermiques.

Les polyesters selon l'invention présentent l'avantage d'être thermoplastiques.

En particulier, les polyesters disposent de températures de transition vitreuse (Tg) pouvant être supérieures ou égales à 50°C, ce qui permet de les utiliser dans de nombreuses applications dans le domaine des emballages.

En outre, les polyesters selon l'invention présentent des masses molaires moyennes en nombre obtenues (Mn) pouvant être supérieures ou égales à 2000 g/mol.

Ainsi, les polyesters selon l'invention constituent une alternative intéressante par rapport aux polyesters synthétiques habituellement utilisés, en particulier par rapport au PETG dans le domaine des plastiques.

D'autres avantages et caractéristiques de l'invention apparaîtront plus clairement à l'examen de la description détaillée ci-après.

Lorsque le polyester selon l'invention est semi-cristallin, il présente avantageusement une température de fusion Tf allant de 100 à 300°C.

La détermination de la température de fusion du polyester est préférentiellement effectuée au pic de l'endotherme de fusion mesurée par calorimétrie différentielle à balayage (DSC « Differential Scanning Calorimetry »), à l'aide d'un appareil Perkin Elmer Pyris 1, en chauffant le polyester à partir de 20°C à une vitesse de 10°C/min.

Le polyester selon l'invention présente préférentiellement une température de transition vitreuse Tg supérieure ou égale à 50°C, de préférence allant de 50 à 150°C, plus préférentiellement de 50°C à 120°C.

La détermination de la température de transition vitreuse au point-moyen du polyester est préférentiellement effectuée en utilisant la méthode des tangentes par calorimétrie différentielle à balayage (DSC « Differential Scanning Calorimetry »), à l'aide d'un appareil Perkin Elmer Pyris 1, en chauffant le polyester à partir de 20°C à une température de 10°C/min.

De préférence, les polyesters selon l'invention présentent des masses molaires moyennes en nombre obtenues (Mn) allant de 2000 à 40000 g/mol, plus préférentiellement allant de 5000 à 30000 g/mol.

La masse molaire moyenne en nombre peut être déterminée par plusieurs techniques comme par exemple la mesure par Chromatographie par Exclusion Stérique ou le calcul par Résonance Magnétique Nucléaire (masse molaire moyenne en nombre absolue).

Comme indiqué ci-avant, le polyester selon l'invention comprend au moins 60% en moles de motif(s) répétitif(s) (a) par rapport à la quantité totale en moles de motifs dudit polyester.

De préférence, le polyester selon l'invention comprend au moins 70% en moles, plus préférentiellement au moins 80% en moles, encore plus préférentiellement au moins 90% en moles, de motif(s) répétitif(s) (a) par rapport à la quantité totale en moles de motifs dudit polyester.

De manière particulièrement préférée, le polyester selon l'invention comprend 100% en moles de motif(s) répétitif(s) (a) par rapport à la quantité totale en moles de motifs dudit polyester.

Au sens de la présente invention, le terme groupement aromatique correspond à un groupement divalent en

$C_6$-$C_{24}$ contenant dans sa structure au moins un noyau benzénique.

De préférence, $R_1$ est un groupement aromatique divalent en $C_6$-$C_{12}$.

Plus préférentiellement, $R_1$ correspond à un noyau benzénique et la substitution des carbonyles est en position 1,3 ou 1,4.

Encore plus préférentiellement, $R_1$ correspond à un noyau benzénique et la substitution des carbonyles sur le noyau est en position 1,4.

Le noyau benzénique peut être substitué par :

- un ou plusieurs radicaux alkyles, linéaires ou ramifiés, en $C_1$-$C_4$, notamment en $C_3$ ;
- un ou plusieurs groupements sulfonates, notamment un groupement $-SO_2OM$ ; M représentant un métal, en particulier un métal alcalin ou un métal de transition ;
- un ou deux cycles aromatiques, notamment un cycle benzénique,
- un ou plusieurs groupements hydroxyles.

En particulier, le noyau benzénique peut être substitué par un ou plusieurs groupements sulfonates $-SO_2OM$ ; M représentant un métal alcalin.

Préférentiellement, le noyau benzénique peut être substitué par un ou plusieurs groupements sulfonates $-SO_2ONa$, $-SO_2OLi$,$-SO_2OAg$.

Encore plus préférentiellement, le noyau benzénique peut être substitué par un ou plusieurs groupements sulfonates $-SO_2ONa$.

Le noyau benzénique peut également être condensé avec un ou deux autres cycles benzéniques.

En particulier, le noyau benzénique ne comprend pas d'autres hétéroatomes dans sa structure. Autrement dit, le noyau benzénique est exclusivement composé d'atomes de carbone et d'hydrogène.

Avantageusement, le 2,5-bis(hydroxyméthyl)tétrahydrofurane est sous la forme d'un mélange de stéréoisomères.

Plus particulièrement, le 2,5-bis(hydroxyméthyl)tétrahydrofurane est avantageusement sous la forme d'un mélange de stéréoisomères cis/trans dans des proportions pondérales allant de 1/99 à 99/1, plus préférentiellement de 60/40 à 90/10.

Selon un mode de réalisation préféré, le polyester selon l'invention comprend au moins 60% en moles de motif répétitif de formule (III) :

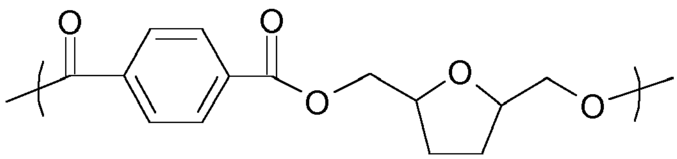

(III)

ladite quantité molaire étant calculée par rapport à la quantité totale en moles de motifs dudit polyester.

Plus préférentiellement, le polyester comprend 100% en moles de motif répétitif de formule (III).

Selon certains modes particuliers de réalisation, le polyester selon l'invention comprend en outre de 1% à 40% en moles, par rapport à la quantité totale en moles de motifs dudit polyester, d'un ou plusieurs motif(s) répétitif(s) autre(s) que le ou les motif(s) répétitif(s) (a).

De préférence, le polyester selon l'invention comprend en outre de 10 à 40% en moles, en particulier de 20 à 40% en moles, par rapport à la quantité totale en moles de motifs dudit polyester, d'un ou plusieurs motif(s) répétitif(s) autre(s) que le ou les motif(s) répétitif(s) (a).

Selon un premier mode de réalisation particulier, le polyester selon l'invention comprend en outre de 1 à 40% en moles, par rapport à la quantité totale en moles de motifs dudit polyester, d'un ou plusieurs motif(s) répétitif(s) (b) de formule générale (IV) :

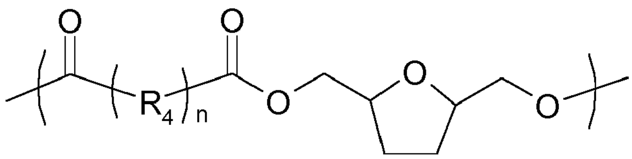

(IV)

dans laquelle :

- n représente 0 ou 1,
- $R_4$ représente :

  i) un groupement alkyle divalent, linéaire ou ramifié, en $C_1$-$C_{36}$, notamment en $C_1$-$C_{12}$,
  ii) un groupement cycloalkyle($C_3$-$C_6$) divalent.

Cela signifie que le polyester selon l'invention peut être un copolyester comprenant au moins 60% en moles de motif(s) répétitif(s) (a), par rapport à la quantité totale en moles de motifs dudit polyester, et un ou plusieurs motif(s) répétitif(s) (b).
De préférence, n représente 1.
De préférence, $R_4$ représente un groupement alkyle linéaire en $C_1$-$C_{12}$ ou un cyclohexane.
Le groupement $R_4$ peut éventuellement être substitué par un ou plusieurs radicaux alkyles en $C_1$-$C_4$.
Selon un second mode de réalisation particulier de l'invention, le polyester selon l'invention comprend en outre de 1 à 40% en moles, par rapport à la quantité totale en moles de motifs dudit polyester, d'un ou plusieurs motif(s) répétitif(s) (c) de formule générale (V) :

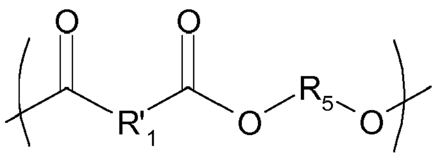

(V)

dans laquelle :

$R_1$'peut être au choix égal à $R_1$ ou $R_4$ tel que décrit précédemment, et
$R_5$ représente :

  i) un groupement alkyle divalent, linéaire ou ramifié, en $C_2$-$C_{12}$, éventuellement interrompu par un ou plusieurs atomes d'oxygène ou un radical cycloalkyle ($C_3$-$C_6$) ou groupement alkyl-cycloalkyl-alkyl,
  ii) un radical cycloalkyle ($C_3$-$C_{10}$) divalent éventuellement interrompu par un ou plusieurs atomes d'oxygène.

Ainsi, le polyester selon l'invention peut être un copolyester comprenant au moins 60% en moles de motif(s) répétitif(s) (a), par rapport à la quantité totale en moles de motifs dudit polyester, et un ou plusieurs motif(s) répétitif(s) (c).
De préférence, $R_5$ représente un groupement alkyle divalent linéaire en $C_2$-$C_{12}$, notamment en $C_2$-$C_8$, ou un hétérocycle en $C_3$-$C_8$, notamment en $C_8$.
En particulier, l'hétérocycle en $C_8$ peut correspondre à deux cycles pentane condensés l'un sur l'autre, chacun desdits cycles comportant au moins un atome d'oxygène.
Préférentiellement, $R_5$ représente un groupement alkyle divalent en $C_2$-$C_8$, et plus particulièrement en $C_2$.
Selon un troisième mode de réalisation particulier, le polyester selon l'invention comprend de 1% à 40% en moles, par rapport à la quantité totale en moles de motifs dudit polyester, d'un ou plusieurs motif(s) répétitif(s) (d) de formule générale (VI) :

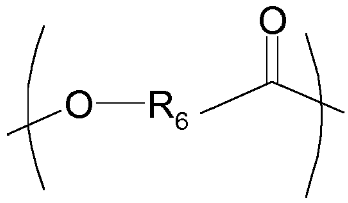

(VI)

dans laquelle $R_6$ désigne un groupement alkylène, de préférence un groupement alkylène en $C_{1-10}$, pouvant contenir des groupements alkyls

Le (ou les) motif(s) répétitif(s) (d) sont susceptibles d'être formés par la réaction d'auto-polycondensation d'une lactone comme la caprolactone et/ou d'un acide-alcool comme l'acide glycolique ou l'acide lactique.

Selon un quatrième mode de réalisation particulier de l'invention, le polyester selon l'invention comprend en outre de 1 à 40% en moles, par rapport à la quantité totale en moles de motifs dudit polyester, d'un ou plusieurs motif(s) répétitif(s) (e) de formule générale (VII) :

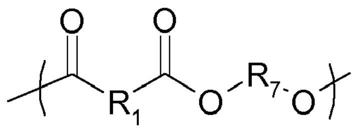

(VII)

dans laquelle $R_1$ présente la même définition que dans la formule (I) et $R_7$ représente un groupement alkyle, linéaire ou ramifié, en $C_3$-$C_{16}$, éventuellement interrompu par au moins un atome d'oxygène.

De préférence, $R_7$ représente un groupement alkyle ramifié $C_3$-$C_{16}$, notamment en $C_4$ et $C_{10}$.

La présente invention a également pour objet un procédé de synthèse du polyester conforme à l'invention comprenant les étapes suivantes :

(a) mise en réaction d'un mélange comprenant le 2,5-bis(hydroxyméthyl)tétrahydrofurane et un ou plusieurs composés de formule générale (VIII), en présence d'un ou plusieurs catalyseur(s) :

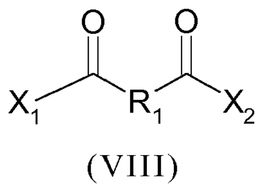

(VIII)

dans laquelle :

- $R_1$ présente la même définition que dans la formule (I) ;
- $X_1$ et $X_2$ représentent, indépendamment l'un de l'autre, un atome de chlore ou respectivement un groupement $OR_2$ ou $OR_3$ ;
- $R_2$ et $R_3$, identiques ou différents, représentent indépendamment l'un de l'autre, un atome d'hydrogène ou un groupement alkyle en $C_1$-$C_6$, notamment en $C_1$-$C_4$, en particulier $C_1$.

(b) récupération du polyester.

Le procédé de synthèse selon l'invention mettant en oeuvre le 2,5-bis(hydroxyméthyl)tétrahydrofurane et un seul composé de formule (VIII) donne lieu à l'obtention d'un homopolyester.

Le procédé de synthèse selon l'invention mettant en oeuvre le 2,5-bis(hydroxyméthyl)tétrahydrofurane et au moins deux composés différents de formule (VII) donne lieu à l'obtention d'un copolyester.

Le procédé selon l'invention peut comporter d'autres étapes en amont, en aval, ou intermédiaires. Les étapes du procédé peuvent être menées en continu ou discontinu, dans des dispositifs séparés les uns des autres, ou au sein

de mêmes dispositifs.

Le procédé présente notamment l'avantage de pouvoir conduire à un polyester thermoplastique.

De préférence, dans la formule (VIII), $X_1$ et $X_2$ représentent respectivement un groupement $OR_2$ ou $OR_3$.

Plus préférentiellement, $R_2$ et $R_3$ représentent un atome d'hydrogène ou un groupement alkyle en $C_1$.

Encore plus préférentiellement, $R_2$ et $R_3$ représentent un atome d'hydrogène.

Conformément à un mode de réalisation, $R_2$ et $R_3$ représentent indépendamment l'un de l'autre, un groupement alkyle en $C_1$-$C_6$, notamment en $C_1$-$C_4$, en particulier en $C_1$.

Ainsi, le ou les composé(s) de formule générale (VIII) sont préférentiellement choisis parmi les diacides carboxyliques aromatiques ou leurs diesters répondant à la formule (II) précédemment décrite.

Selon un mode de réalisation particulier de l'invention, le ou les diacide(s) carboxylique(s) aromatique(s), ou l'un de ses diesters sont choisis parmi l'acide téréphtalique, le téréphtalate de diméthyle, l'acide isophtalique, l'isophtalate de diméthyle, l'acide bibenzoïque, le dibenzoate de diméthyle, l'acide 2,6-naphtalènedicarboxylique, l'acide phtalique, le phtalate de diméthyle, l'acide 5-tertiobutylisophtalique, le sel de sodium de l'acide 5-sulfoisophtalique, le sel de lithium de l'acide 5-sulfoisophtalique et leurs mélanges.

Les diacides carboxyliques aromatiques particulièrement préférés sont les acides téréphtalique et isophtalique.

L'acide téréphtalique et l'acide isophtalique sont avantageux car ils confèrent aux polyesters de très bonnes propriétés mécaniques et thermiques.

De préférence, l'étape (a) met en réaction un mélange comprenant l'acide téréphtalique et le 2,5-bis(hydroxyméthyl)tétrahydrofurane en présence d'un ou plusieurs catalyseurs.

Conformément à un mode de réalisation avantageux, les composés de formule générale (VIII) sont des diesters de diacide carboxylique et préférentiellement le téréphtalate de diméthyle.

Selon un premier mode de réalisation du procédé, le mélange mis en oeuvre au cours de l'étape (a) peut également comprendre un ou plusieurs diacide(s) carboxylique(s) aliphatique(s).

Conformément à ce mode de réalisation, le ou les diacide(s) carboxylique(s) aliphatique(s) sont choisis parmi l'acide oxalique, l'acide malonique, l'acide succinique, l'acide glutarique, l'acide 2-methylglutarique, l'acide adipique, l'acide pimélique, l'acide subérique, l'acide azélaique, l'acide sébacique, l'acide 1,12-dodécanedioique, l'acide 1,2 ou 1,3 ou 1,4-cyclohexane dicarboxylique (isomères cis, trans et les mélanges), les dimères d'acide gras en $C_{36}$ comme ceux qui sont commercialement disponibles sous la marque Pripol® et leurs mélanges.

Selon un deuxième mode de réalisation du procédé, le mélange mis en oeuvre au cours de l'étape (a) peut également comprendre un ou plusieurs diol(s) différent(s) du 2,5-bis(hydroxyméthyl)tétrahydrofurane.

Conformément à ce mode de réalisation, le ou les diol(s) sont choisis parmi l'éthylène glycol, les isomères du 1,4:3,6-dianhydrohexitol (isosorbide, isoidide, isomannide), le 1,4-cyclohexanediméthanol (cis, trans ou les mélanges cis/trans dans des proportions massiques allant de 0,01/99,9 à 99,9/0,01% en poids), le propylène glycol, le butylène glycol, le diéthylène glycol, l'hexaméthylène diol et leurs mélanges.

De préférence, le diol est l'éthylène glycol.

Selon un troisième mode de réalisation du procédé, le mélange mis en oeuvre au cours de l'étape (a) peut également comprendre une lactone, notamment la caprolactone, et/ou un acide-alcool tel que l'acide glycolique ou son dimère, l'acide lactique ou son dimère.

Selon un quatrième mode de réalisation, le mélange mis en oeuvre au cours de l'étape (a) peut également comprendre un ou plusieurs polyalcool(s) différent(s) du 2,5-bis(hydroxyméthyl)tétrahydrofurane et des diols précédemment décrits.

Par polyalcool, on entend un composé organique comprenant au moins trois groupements hydroxyles dans sa structure, notamment quatre (comme le pentaérythritol), cinq ou six (comme le dipentaérythritol) groupements hydroxyles.

Les polyalcools pouvant être utilisés présentent l'avantage d'agir en tant qu'agent de branchement pour moduler la viscosité fondue du polyester.

Dans un mode de réalisation préféré, le procédé selon l'invention comprend les étapes suivantes :

(a) estérification ou transestérification par le 2,5-bis(hydroxyméthyl)tétrahydrofurane d'un ou plusieurs composés de formule générale (VIII);

(b) polymérisation du produit d'estérification ou de transestérification en présence d'un ou plusieurs catalyseur(s) ;

(c) récupération du polyester.

Lors de l'étape (a), on utilise généralement un excès molaire de 2,5-bis(hydroxyméthyl)tétrahydrofurane, et le cas échéant de diols, par rapport aux composés de formule générale (VIII), pouvant aller de 1 à 100% en moles, préférentiellement de 5 à 80% en moles.

Le procédé peut être appliqué à la polymérisation des diacides carboxyliques aromatiques tels que mentionnés ci-dessus avec le 2,5-bis(hydroxyméthyl)tétrahydrofurane et éventuellement les diols, les polyalcools et les diacides

carboxyliques aliphatiques tels que mentionnés ci-avant.

De préférence, le catalyseur est choisi parmi les dérivés de l'antimoine, tel que le trioxyde de diantimoine ($Sb_2O_3$), du titane, tel que le tétrabutoxyde de titane ($Ti(OBu)_4$) ou le tétraisopropoxide de titane, du manganèse et du germanium.

Selon un mode de réalisation particulièrement préféré, le procédé comprend les étapes suivantes :

(a) estérification ou transestérification par le 2,5-bis(hydroxyméthyl)tétrahydrofurane d'un ou plusieurs composés de formule générale (VIII), réalisée sous atmosphère inerte à une pression allant de la pression atmosphérique à 8 bars absolus, par une montée en température de la température ambiante jusqu'à une température allant habituellement de 150 à 280°C, de préférence de 200 à 240°C, à raison de 0,3 à 3°C/min suivie d'un isotherme à une température comprise entre 200 et 240°C pendant au moins 10 minutes ;

(b) polymérisation du produit d'estérification ou de transestérification, en présence d'un ou plusieurs catalyseur(s), par mise sous vide à une pression inférieure ou égale à 1 mbar à une température supérieure à 200°C, préférentiellement inférieure à 300°C, encore plus préférentiellement inférieure à 260°C pendant au moins 5 minutes, de préférence au moins 30 minutes.

(c) récupération du polyester.

L'étape a) d'estérification ou de transestérification, est une étape communément réalisée dans les procédés industriels de fabrication de polyesters. Lorsque l'étape (a) est une transestérification, elle nécessite la présence d'un catalyseur comme par exemple le tétrabutoxyde de titane.

Avantageusement, le ou les catalyseurs sont choisis parmi les dérivés de l'antimoine, du titane, du manganèse ou du germanium.

En outre, elle est réalisée sous atmosphère de gaz inerte qui peut être choisi par exemple parmi l'azote, les gaz rares, les gaz inertés comme par exemple l'air enrichi en azote, le dioxyde de carbone, et leurs mélanges. La présence du gaz inerte permet de plus d'éviter toute présence d'oxygène au sein du milieu et ainsi d'éviter une dégradation du polyester.

Lors de cette étape (a), l'eau de condensation ou l'alcool de transréaction est éliminé par distillation.

L'étape ultérieure de polymérisation (b) est une étape de polymérisation par transréaction. Elle est généralement catalysée à l'aide de composés métalliques, par exemple par des composés de l'antimoine, du titane ou du germanium. Elle peut être catalysée par tout catalyseur de polycondensation décrit dans l'art antérieur.

Lors de cette étape (b), l'augmentation de la viscosité du polymère fondu s'accompagne de l'élimination de l'excès de 2,5-bis(hydroxyméthyl)tétrahydrofurane.

Le polyester obtenu est de degré de polymérisation moyen allant de 10 à 300, de préférence de 30 à 200.

Par degré de polymérisation moyen, on entend le degré de polymérisation moyen absolu défini par la formule suivante (V) :

$$DP_n = \frac{1}{M_0}\frac{\sum_i n_i M_i}{\sum_i n_i} = \frac{M_n}{M_0} \quad (V)$$

où $M_o$ est la masse molaire de l'unité monomère, c'est-à-dire dans le cas d'un homopolyester selon l'invention, la moitié de la masse molaire du motif de répétition (a) du polyester, $M_i$ est la masse molaire de la chaîne de taille référencée i, et $n_i$ est le nombre de chaînes de taille référencée i. Les masses molaires sont les masses molaires absolues.

Le degré de polymérisation moyen est relié à la masse molaire moyenne en nombre $M_n$ absolue, selon la formule (1) ci-dessus. Cette dernière est généralement évaluée par chromatographie par perméation de gel (GPC) ou chromatographie par exclusion stérique (CES) avec couplage viscosimétrique.

Elle peut également être calculée par Résonance Magnétique Nucléaire (RMN) en se basant sur la formule suivante (IX) :

$$DP_n = \frac{(1+r)}{(1+r-2pr)} \quad (IX)$$

Dans laquelle :

- r désigne le rapport stoechiométrique entre les motifs diacides et les motifs diols ou inversement avec obligatoirement $r<1$ ;
- p désigne la conversion chimique.

Elle peut également être calculée par titration des extrémités de chaines en se basant sur la formule suivante (X) :

$$Mn=2000000/(\text{Somme des concentrations en groupements terminaux}) \quad (X)$$

dans laquelle les concentration en groupements terminaux sont exprimées en meq/kg.

La viscosité en solution du polymère est liée à la longueur des chaînes et donc à la masse molaire moyenne en nombre et au degré de polymérisation moyen. C'est un indicateur d'avancement de la polymérisation.

L'invention porte également sur une composition comprenant un polyester selon l'invention.

La composition selon l'invention peut comprendre entre 20 et 90% en poids, préférentiellement entre 20 et 70% en poids, et plus préférentiellement entre 35 et 65% en poids de polyester selon l'invention, par rapport au poids total de la composition.

La composition selon l'invention peut éventuellement comprendre un ou plusieurs autres polymères tels que les polyesters ou les polyoléfines. Ces autres polymères représentent avantageusement moins de 40% en poids par rapport au poids de la composition.

La composition selon l'invention peut en outre comprendre des charges de renfort ou de remplissage. Les charges de renfort ou de remplissage sont des charges classiquement utilisées pour la réalisation de compositions thermoplastiques, notamment à base de polyamide.

On peut notamment citer les charges fibreuses de renfort, telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que des particules de diméthacrylates, les billes de verre ou de la poudre de verre. On préfère notamment utiliser les fibres de renfort, telles que les fibres de verre.

La composition selon l'invention peut comprendre entre 5 et 60 % en poids de charges de renfort ou de remplissage, préférentiellement entre 10 et 40 % en poids, par rapport au poids total de la composition.

La composition selon l'invention comprenant le polyester tel que défini précédemment peut comprendre au moins un agent modificateur du choc, c'est-à-dire un composé capable de modifier la résistance aux chocs d'une composition polyester.

Ces composés modificateurs du choc comprennent préférentiellement des groupements fonctionnels réactifs avec le polyester.

On entend selon l'invention par groupements fonctionnels réactifs avec le polyester des groupements capables de réagir ou d'interagir chimiquement avec les fonctions résiduelles acide ou alcool du polyester, notamment par covalence, interaction ionique ou hydrogène ou liaison de van der Walls.

De tels groupements réactifs permettent d'assurer une bonne dispersion des agents modificateurs de chocs dans la matrice polyester. On peut citer par exemple les fonctions anhydrides, époxydes, esters, amines, acides carboxyliques, les dérivés carboxylates ou sulfonates.

La composition selon l'invention peut en outre comprendre des additifs généralement utilisés pour la fabrication de compositions polyester ou polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels. Ils peuvent être ajoutés avant la synthèse avec les monomères, au cours de la synthèse ou après la synthèse du polyester de l'invention.

Ces charges, agents de renfort de chocs et/ou additifs peuvent être ajoutés au polyester par des moyens usuels adaptés biens connus dans le domaine des plastiques techniques en mélange en fondu.

Afin d'ajouter ces différents composés, charges et/ou additifs, on procède à plus ou moins haute température, notamment de 120°C à 300°C, préférentiellement de 220°C à 280°C, à plus ou moins haute force de cisaillement, notamment de $10 s^{-1}$ à $5000 s^{-1}$ selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, avant préparation de la composition finale. On peut par exemple effectuer un pré-mélange dans une résine, par exemple du (co)polyimide, de façon à réaliser un mélange maitre.

La présente invention a également pour objet l'utilisation d'un tel polyester selon l'invention ou d'une telle composition pour la fabrication d'articles plastiques, textiles et d'emballage, notamment par des procédés d'extrusion, d'injection ou de rotomoulage. Dans ces procédés, le polyester ou la composition comprenant le polyester de l'invention est porté à une température supérieure à la Tg (pour un polymère amorphe) et/ou Tf (pour un polymère semi-cristallin), préférablement à une température supérieure à 220°C et inférieure à 300°C, mis en forme et refroidi

En effet, les compositions selon l'invention peuvent trouver de nombreuses applications telles que la fabrication d'articles mis en forme, comme des films, de feuilles, par exemple, pour l'emballage ou la fabrication de 20 corps creux par injection-soufflage.

Dans le cas de fabrication de feuilles ou films, une application importante est la fabrication de films ou feuilles thermoformables obtenus par extrusion ou moulage sans orientation des chaînes de polymères. Les films et feuilles ainsi obtenus ont des propriétés mécaniques et barrière aux gaz améliorées et sont transparentes.

Une des utilisations particulières et importantes de ces compositions est la fabrication de corps creux tels que préformes, bouteilles par la technique d'injection soufflage.

Dans cette utilisation, la composition conforme à l'invention est produite sous forme de granulés de dimensions plus ou moins variables.

Ces granulés sont avantageusement séchés pour obtenir une teneur en humidité inférieure à 50 ppm, de préférence à 20 ppm. Cette étape de séchage n'est pas obligatoire si la teneur en humidité du polyester est suffisamment faible.

Les granulés sont ensuite introduits dans des procédés d'injection-soufflage pour la fabrication de contenants creux tels que des bouteilles.

Ces procédés décrits dans de nombreuses publications et utilisés industriellement, à grande échelle, comprennent une première étape d'injection pour la fabrication de préformes. Dans une seconde étape, les préformes sont soufflées à la forme des bouteilles désirées, avec éventuellement un bi-étirage, après éventuellement réchauffement de la préforme dans le cas d'utilisation de préformes froides.

Les préformes ainsi obtenues sont généralement utilisées dans des procédés de soufflage pour la fabrication de bouteilles. Ces procédés de soufflage sont également répandus et décrits dans de nombreuses publications.

Ils consistent généralement à introduire la préforme dans une installation de soufflage, avec ou sans sur-étirage comportant des moyens de chauffage.

La préforme est chauffée au moins au-dessus de la Tg du polyester puis étirée à l'aide d'une canne d'étirage et pré-soufflée par injection d'un gaz sous pression à une première pression pendant une première période.

Une seconde injection d'un gaz à une seconde pression permet d'obtenir la forme finale de la bouteille avant son injection après refroidissement.

De manière avantageuse, la température de chauffage de la préforme va de 90°C à 110°C. Ce chauffage est réalisé par tout moyen adapté, par exemple par des infrarouges dirigés vers la surface extérieure de la préforme.

Avantageusement, le présoufflage de la préforme a lieu à une première pression allant de $4.10^5$ Pa à $10.10^5$ Pa (4 bars et 10 bars) pendant une période allant de 0,15 à 0,6 secondes.

Le second soufflage est réalisé sous une seconde pression allant de $3.10^6$ Pa à $4.10^6$ Pa (30 et 40 bars) pendant une seconde période allant de 0,3 à 2 secondes.

D'autres avantages, détails de l'invention apparaîtront plus clairement au vu des exemples donnés ci-dessous uniquement à titre d'illustration et ne présentant aucun caractère limitatif.

## EXEMPLES

Mesures

La température de transition vitreuse est déterminée par DSC (Differential Scanning Calorimetry), à l'aide d'un appareil Perkin Elmer Pyris 1, par chauffage d'un échantillon à 10°C/min à partir de la température ambiante jusqu'à 300°C.

La masse molaire moyenne en nombre Mn est déterminée par Résonance Magnétique Nucléaire (RMN) du proton à l'aide d'un appareil Brüker 300 MHz après dissolution du polymère dans l'acide trifluoroacétique deutéré en utilisant la formule (XI) suivante :

$$M_n = Dp_n * M_0 \quad (XI)$$

dans laquelle :

- $DP_n$ représente le degré de polymérisation moyen en nombre ;
- $M_0$ représente la masse molaire de l'unité monomère.

Dans le cas du polyester obtenu par réaction du THFDO avec l'acide téréphtalique (ou ses dérivés), $M_0$=[M(THDO)+M(acide téréphtalique)-2*M($H_2O$)]/2=131 g/mol.

Le degré de polymérisation moyen en nombre ($DP_n$) est calculé en se basant sur la formule (XII) citée ci-avant :

$$DP_n = \frac{(1+r)}{(1+r-2pr)} \quad \text{(XII)}$$

dans laquelle :

- r désigne le rapport stoechiométrique entre les monomères dérivés de diacides carboxyliques et les monomères diols (r<1) quantifié grâce à la RMN ;
- p désigne l'avancement de la réaction de polymérisation, également quantifié grâce à la RMN.

La température de transition vitreuse Tg∞ d'un polyester préparé à partir d'acide téréphtalique et de 2,5-bis(hydroxymethyl)tetrahydrofurane (THFDO) est calculée à partir de l'équation de Fox-Flory (XIII) suivante :

$$Tg(M_n) = Tg\infty - \frac{K}{M_n} \quad \text{(XIII)}$$

dans laquelle :

- $M_n$ désigne la masse molaire moyenne en nombre (g/mol) ;
- $Tg(M_n)$ représente la température de transition vitreuse d'un polymère de masse molaire moyenne en nombre $M_n$ (K) ;
- K désigne une constante déterminée de manière expérimentale,
- Tg∞ représente la température de transition vitreuse maximale d'un polymère théorique de masse molaire infinie.

**I. <u>Exemples comparatifs</u>**

A. <u>Synthèse du 2,5-bis(hydroxyméthyl)furane (FDO)</u>

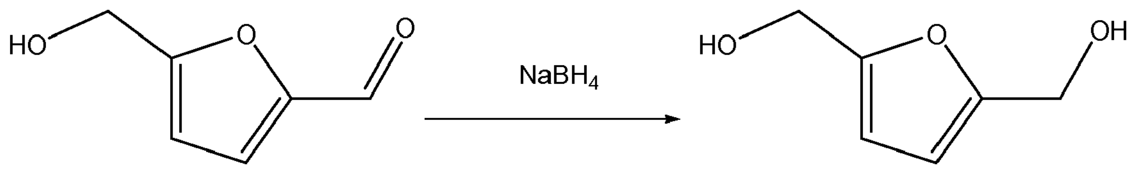


5-(hydroxyméthyl)furan-2-carbaldéhyde (HMF) Mw = 126.03

2,5-bis(hydroxyméthyl)furane (FDO) Mw = 128.05

<u>Procédure :</u>

Du borohydride de sodium ($NaBH_4$, 300.0 g, 7.94 mol) est ajouté lentement pendant une durée de 3 heures à une solution de 5-(hydroxyméthyl)furan-2-carbaldéhyde (HMF, 1000.0 g, 7.94 mol) dans 2500 ml d'éthanol. La température du mélange réactionnel est maintenue entre 0 et 30°C puis le mélange est agité à température ambiante (environ 25°C) pendant 16 heures.

Une solution aqueuse à 10% en acide chlorhydrique est ensuite ajoutée lentement jusqu'à ce que le mélange

réactionnel présente un pH environ égal à 7.

Le mélange est ensuite filtré et le filtrat est concentré sous vide afin d'éliminer l'éthanol et l'eau. Une huile brune est obtenue.

3000 ml d'éthanol est ajoutée à l'huile résultante et le mélange est agité pendant 10 minutes à température ambiante. Le mélange est filtré et le filtrat concentré sous vide jusqu'à obtenir 2 litres. La solution est placée à 0°C pendant 1 heure et un solide apparaît.

Le solide est collecté par filtration et séché avec une pompe à huile pour obtenir 922 g de 2,5-bis(hydroxymethyl)furane (FDO) qui se présente sous la forme d'un solide jaune.

Le rendement de la réaction à partir du 5-(hydroxyméthyl)furan-2-carbaldéhyde (HMF) est de 91%.

Le spectre RMN $H^1$ du produit obtenu correspond à : (400 MHz, *d6*-DMSO) $\delta$4.37 (dd, 4H), 5.17 (t, 2H), 6.18 (s, 2H)

B. <u>Exemple 1</u>

Dans un réacteur de polymérisation muni d'un condenseur, 7,08 g (55,3 mmol) de 2,5-bis(hydroxymethyl)furane (FDO) sont ajoutés à 9,88g (50,8 mmol) de téréphtalate de diméthyle (DMT), 0,66g (10,6 mmol) d'éthylène glycol et 0,0269 g (0,0790 mmol) de tétrabutoxyde de titane. Un excès de diol est utilisé.

Le milieu réactionnel est ensuite agité, un balayage d'azote est appliqué et le réacteur est chauffé jusqu'à 195°C.

Aucune distillation du méthanol n'est observée. Le milieu réactionnel devient noir avec un aspect fortement dégradé. Le produit formé s'avère également infusible.

B. <u>Exemple 2</u>

Le procédé utilisé dans l'exemple 1 est identique à la différence que 6,94g (54,2 mmol) de FDO sont ajoutés dans un réacteur de polymérisation à 10,53g (54,2 mmol) de DMT et 0,0194g (0,0570mmol) de tétrabutoxyde de titane.

Le chauffage du milieu réactionnel conduit à la formation d'un solide qui noircit et se dégrade avec la température.

La combinaison du FDO avec le DMT, seul ou en combinaison avec un diol, ne permet pas l'obtention d'un polyester de chaines linéaires.

## II. Exemples selon l'invention

A. <u>Synthèse du 2.5-bis(hydroxymethyl)tétrahydrofurane (THFDO)</u>

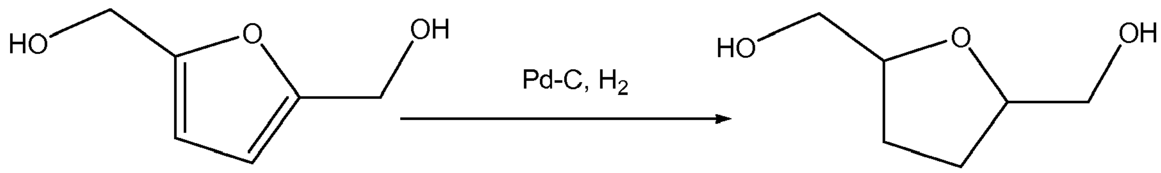


2,5-bis(hydroxyméthyl)furane (FDO) Mw = 128.05

2.5-bis(hydroxymethyl)tétrahydrofurane (THFDO) Mw = 132.08

Procédure:

2400 g (18.75 mol) de 2,5-bis(hydroxyméthyl)furane (FDO), un catalyseur de palladium sur charbon (Pd/C) (10%, 240g) et 25 ml d'éthanol sont ajoutés dans un réacteur Parr ayant un volume de 50 litres. Le mélange est hydrogéné à une température de 65°C sous une pression de 40 atm et suivi par RMN $H^1$.

Après 16 heures, la réaction est complète. Le mélange réactionnel est filtré sur célite et le filtrat est lavé avec 5 litres de méthanol. Le filtrat est ensuite concentré sous vide afin d'obtenir une huile brune pâle.

L'huile résultante est distillée sous pression (100 Pa) à une température de 120°C afin d'obtenir 1850g de 2.5-bis(hydroxymethyl)tétrahydrofurane (THFDO) qui se présente sous la forme d'une huile incolore.

Le spectre RMN $H^1$ du produit obtenu est : (400 MHz, $d_6$-DMSO) $\delta$1.61 (m, 2H), 1.81 (m, 2H), 3.32 (m, 4H), 3.82 (m, 2H), 4.54 (m, 2H). $^{13}C$ RMN (400 MHz, $d_6$-DMSO) (isomère majeur): $\delta$ 27.73, 64.48, 80.25; (isomère mineur): $\delta$ 28.11, 63.35, 79.84.

Le rendement total de la réaction à partir du 2,5-bis(hydroxyméthyl)furane (FDO) est de 68%.

B. Exemple 3 (selon l'invention)

Dans un réacteur de polymérisation muni d'un condenseur, 7,59 g (57,4 mmol) de 2.5-bis(hydroxymethyl)tétrahydrofurane (THFDO), avec un rapport molaire cis:trans de 85:15, sont ajoutés à 9.91g (51,0 mmol) de téréphtalate de diméthyle (DMT), en présence de 0,0271 g (0,0796 mmol) de tétrabutoxyde de titane. Le milieu réactionnel est agité, un balayage d'azote est appliqué et le réacteur est chauffé à 1°C/min jusqu'à 240°C avec un palier de 25 minutes à 240°C.

La distillation du produit de condensation (méthanol) est observée. Lorsque la distillation de méthanol cesse, le milieu réactionnel est alors mis sous vide à une pression inférieure à 1 mbar, ce qui permet d'augmenter la masse molaire et donc la viscosité du milieu réactionnel. Après 70 minutes sous vide, le réacteur est refroidi et le polyester est récupéré et refroidi.

Le polyester formé est transparent ambré et a une température de transition vitreuse de 69°C et une Tg∞ égale à 86,3°C.

L'analyse par RMN (résonnance magnétique nucléaire) permet de calculer une masse molaire moyenne égale à 6270 g/mol.

Ce polyester présente une Tg satisfaisante pour une application dans le domaine de l'emballage.

C. Exemple 4 (selon l'invention)

Selon un procédé identique à celui de l'exemple 3, 6,40 g (48,4 mmol) de 2.5-bis(hydroxymethyl)tétrahydrofurane (THFDO), avec un rapport molaire cis:trans de 85:15, sont ajoutés à 9,35g (48,2 mmol) de téréphtalate de diméthyle (DMT) et 0,0258g (0,0764 mmol) de tétrabutoxyde de titane. Le milieu réactionnel est chauffé à 1°C/min jusqu'à 240°C avec un palier de 25 minutes à 240°C.

Le milieu réactionnel est ensuite mis sous vide inférieur à une pression inférieure à 1 mbar pendant 90 minutes.

Le polyester formé est transparent avec une couleur ambrée et présente une température de transition vitreuse de 58°C et une Tg∞ égale à 86,3°C.

L'analyse par RMN (résonnance magnétique nucléaire) permet de calculer une masse molaire moyenne en nombre de 3870 g/mol.

Afin d'obtenir un polyester de masse molaire moyenne en nombre élevée, il est préférable de partir d'un excès de diols par rapport aux diacides carboxyliques.

## Revendications

1. Polyester comprenant au moins 60% en moles d'un ou plusieurs motif(s) répétitif(s) (a) de formule générale (I) :

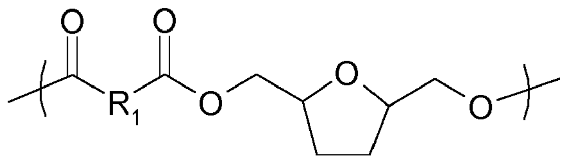

(I)

dans laquelle $R_1$ représente un groupement aromatique divalent en $C_6$-$C_{24}$ comprenant au moins un noyau benzénique,
ladite quantité molaire étant calculée par rapport à la quantité totale en moles de motifs dudit polyester.

2. Polyester selon la revendication 1, **caractérisé en ce que** ledit polyester comprend au moins 70% en moles, plus préférentiellement au moins 80% en moles, encore plus préférentiellement au moins 90% en moles, de motif(s) répétitif(s) (a), par rapport à la quantité totale en moles de motifs dudit polyester, et, en particulier, ledit polyester comprend 100% en moles de motif(s) répétitif(s) (a) par rapport à la quantité totale en moles de motifs dudit polyester.

3. Polyester selon l'une des revendications précédentes, **caractérisé en ce que** $R_1$ est un groupement aromatique divalent en $C_6$-$C_{12}$, de préférence un noyau benzénique.

4. Polyester selon l'une des revendications précédentes, **caractérisé en ce que** ledit noyau benzénique est substitué par :

- un ou plusieurs radicaux alkyles, linéaires ou ramifiés, en $C_1$-$C_4$, notamment en $C_3$ ;
- un ou plusieurs groupements sulfonates $-SO_2OM$ ; M représentant un métal, en particulier un métal alcalin ou un métal de transition,
- un ou deux cycles aromatiques, notamment un cycle benzénique ;
- un ou plusieurs groupements hydroxyles.

**5.** Polyester selon l'une des revendications précédentes, **caractérisé en ce que** le 2,5-bis(hydroxyméthyl)tétrahydrofurane est sous la forme d'un mélange de stéréoisomères, et, en particulier, le 2,5-bis(hydroxyméthyl)tétrahydrofurane est sous la forme d'un mélange d'isomères cis/trans dans des proportions pondérales allant de 1/99 à 99/1, plus préférentiellement de 60/40 à 90/10.

**6.** Polyester selon l'une des revendications précédentes, **caractérisé en ce que** :

soit ledit polyester comprend de 1 à 40% en moles, par rapport à la quantité totale en moles de motifs dudit polyester, d'un ou plusieurs motif(s) répétitif(s) (b) de formule générale (IV) :

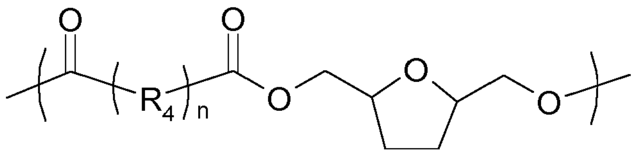

(IV)

dans laquelle :

- n représente 0 ou 1 ;
- $R_4$ représente :

(i) un groupement alkyle divalent, linéaire ou ramifié, en $C_1$-$C_{36}$ ;
(ii) un groupement cycloalkyle en $C_3$-$C_6$ divalent,

soit ledit polyester comprend de 1 à 40% en moles, par rapport à la quantité totale en moles de motifs dudit polyester, d'un ou plusieurs motif(s) répétitif(s) (c) de formule générale (V) :

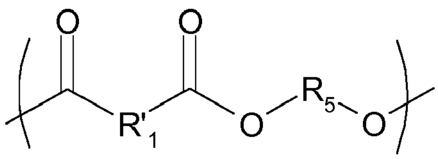

(V)

dans laquelle :

R' correspond à $R_1$ tel que défini dans la revendication 1 ou $R_4$ tel que défini dans la revendication 9, $R_5$ représente :

(i) un groupement alkyle divalent, linéaire ou ramifié, en $C_2$-$C_{12}$, éventuellement interrompu par un ou plusieurs atomes d'oxygène ou un radical cycloalkyle ($C_3$-$C_6$) ou un groupement alkyl-cycloalkyl-alkyl;
(ii) un radical cycloalkyle ($C_3$-$C_{10}$) divalent éventuellement interrompu par un ou plusieurs atomes d'oxygène,

soit ledit polyester comprend de 1 à 40% en moles, par rapport à la quantité totale en moles de motifs dudit

polyester, d'un ou plusieurs motif(s) répétitif(s) (d) de formule générale (VI) :

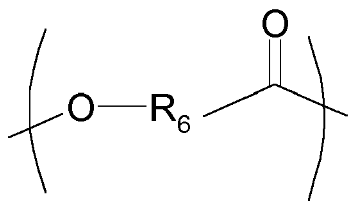

(VI)

dans laquelle $R_6$ représente un groupement alkylène en $C_{1-10}$,
soit ledit polyester comprend de 1 à 40% en moles, par rapport à la quantité totale en moles de motifs dudit polyester, d'un ou plusieurs motif(s) répétitif(s) (e) de formule générale (VII) :

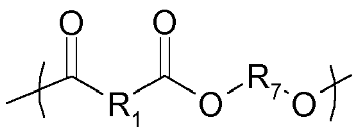

(VII)

dans laquelle $R_1$ est tel que défini dans la revendication 1 et $R_7$ représente un groupement alkyle polyvalent, linéaire ou ramifié, en $C_3$-$C_{16}$, éventuellement interrompu par un atome d'oxygène
soit ledit polyester comprend de 1 à 40% en moles, par rapport à la quantité totale en moles de motifs dudit polyester, de motifs répétitifs appartenant à au moins deux groupes différents de motifs répétitifs, lesdits groupes étant choisis parmi le groupe constitué par les motifs répétitifs (b) de formule générale (IV), le groupe constitué par les motifs répétitifs (c) de formule générale (V), le groupe constitué par les motifs répétitifs (d) de formule générale (VI) et le groupe constitué par les motifs répétitifs (e) de formule générale (VII), comme définis ci-avant.

**7.** Polyester selon l'une des revendications précédentes, **caractérisé en ce qu'**il présente des masses molaires moyennes en nombre obtenues (Mn) allant de 2000 à 40000 g/mol, plus préférentiellement allant de 5000 à 30000 g/mol.

**8.** Procédé de synthèse d'un polyester selon l'une des revendications précédentes 1 à 7, comprenant les étapes suivantes :

(a) mise en réaction d'un mélange comprenant le 2,5-bis(hydroxyméthyl)tétrahydrofurane et un ou plusieurs composés de formule générale (VIII), en présence d'un ou plusieurs catalyseur(s) :

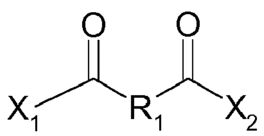

(VIII)

Dans laquelle :

- $R_1$ est tel que défini dans la revendication 1 ;
- $X_1$ et $X_2$ représentent, indépendamment l'un de l'autre, un atome de chlore ou respectivement un groupement $OR_2$ ou $OR_3$ ;
- $R_2$ et $R_3$ identiques ou différents, représentent indépendamment l'un de l'autre, un atome d'hydrogène

ou un groupement alkyle en $C_1$-$C_6$, notamment en $C_1$-$C_4$, en particulier $C_1$,

(b) récupération du polyester.

**9.** Procédé selon la revendication 8, **caractérisé en ce que** les composés de formule générale (VIII) sont des diacides carboxyliques aromatiques, ou leurs diesters, choisis parmi l'acide téréphtalique, le téréphtalate de diméthyle, l'acide isophtalique, l'isophtalate de diméthyle, l'acide bibenzoïque, le dibenzoate de diméthyle, l'acide 2,6-naphtalènedicarboxylique, l'acide phtalique, le phtalate de diméthyle, l'acide 5-tertiobutylisophtalique, le sel de sodium de l'acide 5-sulfoisophtalique, le sel de lithium de l'acide 5-sulfoisophtalique et leurs mélanges.

**10.** Procédé selon la revendication 8 ou 9, **caractérisé en ce que** le mélange mis en oeuvre au cours de l'étape (a) comprend un ou plusieurs acide(s) carboxylique(s) aromatique(s) choisi(s) parmi l'acide oxalique, l'acide malonique, l'acide succinique, l'acide glutarique, l'acide 2-méthylglutarique, l'acide adipique, l'acide pimélique, l'acide subérique, l'acide azélaique, l'acide sébacique, l'acide 1,12-dodécanedioique, l'acide 1,2 ou 1,3 ou 1,4-cyclohexane dicarboxylique (isomères cis, trans et les mélanges), les dimères d'acide gras en $C;_6$ et leurs mélanges.

**11.** Procédé selon la revendication 8 ou 9, **caractérisé en ce que** le mélange mis en oeuvre au cours de l'étape (a) comprend un ou plusieurs diol(s) choisi(s) parmi l'éthylène glycol, les isomères du 1,4:3,6-dianhydrohexitol (isosorbide, isoidide, isomannide), le 1,4-cyclohexanediméthanol (cis, trans ou les mélanges cis/trans dans des proportions massiques allant de 0,01/99,9 à 99,9/0,01% en poids), le propylène glycol, le butylène glycol, le diéthylène glycol, l'hexaméthylène diol et leurs mélanges.

**12.** Procédé selon l'une des revendications 8 à 11, **caractérisé en ce que** le catalyseur est choisi parmi les dérivés de l'antimoine, du titane, du manganèse et du germanium.

**13.** Composition comprenant un polyester selon l'une des revendications 1 à 7 ou synthétisé par le procédé selon l'une quelconque des revendications 8 à 12.

**14.** Utilisation d'un polyester selon l'une quelconque des revendications 1 à 13 ou synthétisé par le procédé selon l'une quelconque des revendications 8 à 12, ou encore de la composition selon la revendication 13 pour la fabrication d'articles plastiques, textiles, et d'emballage.

Europäisches Patentamt
European Patent Office
Office européen des brevets

# RAPPORT DE RECHERCHE EUROPEENNE

Numéro de la demande
EP 14 30 7138

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MOORE J A ET AL: "Polyesters derived from Furan and Tetrahydrofuran Nuclei", MACROMOLECULES, AMERICAN CHEMICAL SOCIETY, vol. 11, no. 3, 1 janvier 1978 (1978-01-01), pages 568-573, XP002413093, ISSN: 0024-9297, DOI: 10.1021/MA60063A028 * pages 568-569 * * page 571, colonne 1 * ----- | 1-14 | INV. C08G63/183 |
| A | CLAUDE MOREAU ET AL: "Recent Catalytic Advances in the Chemistry of Substituted Furans from Carbohydrates and in the Ensuing Polymers", TOPICS IN CATALYSIS, KLUWER ACADEMIC PUBLISHERS-PLENUM PUBLISHERS, NE, vol. 27, no. 1-4, 1 février 2004 (2004-02-01), pages 11-30, XP019292015, ISSN: 1572-9028 * page 11, colonne 2 * ----- | 1-14 | |
| | | | DOMAINES TECHNIQUES RECHERCHES (IPC) |
| A | WO 2013/062408 A1 (FURANIX TECHNOLOGIES BV [NL]) 2 mai 2013 (2013-05-02) * revendications 1-15 * * exemples 1-5 * ----- | 1-14 | C08G |

1

Le présent rapport a été établi pour toutes les revendications

| Lieu de la recherche | Date d'achèvement de la recherche | Examinateur |
|---|---|---|
| La Haye | 29 mai 2015 | Pouilley, Delphine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 14 30 7138

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-05-2015

| Document brevet cité au rapport de recherche | Date de publication | Membre(s) de la famille de brevet(s) | Date de publication |
|---|---|---|---|
| WO 2013062408 A1 | 02-05-2013 | CA 2853244 A1 | 02-05-2013 |
| | | CN 104024301 A | 03-09-2014 |
| | | EP 2771382 A1 | 03-09-2014 |
| | | JP 2014530948 A | 20-11-2014 |
| | | KR 20140110845 A | 17-09-2014 |
| | | US 2014336349 A1 | 13-11-2014 |
| | | WO 2013062408 A1 | 02-05-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 39024730 B


### Littérature non-brevet citée dans la description


- **THIEM ; LÜDERS.** Synthesis of polyterephthalates derived from dianhydrohexitols. *Polymer Bulletin,* 1984, 365-369
- **STORBECK et al.** Synthesis and properties of polyesters based on 2,5-furandicarboxylic acid and 1,4:3,6-dianhydrohexitols. *Polymer,* 1993, vol. 34, 5003-5006
- Über polyamide aus heterocyclischen dicarbonsäuren. *Die Makromolekulare Chemie,* 1961, vol. 47, 93-113
- Polyesters of 2,5-disubstituted furan and tetrahydrofuran. *Polymer preprints,* Septembre 1974, vol. 15 (2), 441-444
- Synthesis and caracterization of poly(2,5-furan dicarboxylate)s based on a variety of diols. *Journal of polymer science part A : Polymer chemistry,* 2011, vol. 49, 3759-3768